# EUROPÄISCHE PATENTANMELDUNG

(11) **EP 4 512 588 A1**
(43) Veröffentlichungstag der Anmeldung: **26.02.2025**
(21) Anmeldenummer: 24194302.6
(22) Anmeldetag: 13.08.2024
(51) Int. Cl.: B27K 3/52, C09D 183/06, C09D 197/00, C09D 1/02, C08K 3/22, C09D 1/04

(54) **HOLZSCHUTZMITTEL**

(30) Priorität: 14.08.2023 DE 102023121695
(71) Anmelder: KSK Forschung und Entwicklungs GmbH, 04720 Döbeln (DE)
(72) Erfinder: RISCHER, Uwe, 01277 Dresden (DE)
(74) Vertreter: Liedtke & Partner Patentanwälte

(57) **Zusammenfassung**

Die Erfindung betrifft ein Holzschutzmittel, umfassend:
- eine Mischung von 65 Gew.-% bis 90 Gew.-% eines Basisschutzmittels, umfassend mindestens ein Silikat, mindestens ein kurzkettiges Silan, mindestens ein langkettiges Silan, Ethanol und/oder Butan-2-ol als Konservierungsstoff,
- 1 % bis 5 % Titan(IV)-oxid, und
- 5 % bis 15 % Lignin.

Die Erfindung betrifft ferner ein Herstellungsverfahren sowie die Verwendung des Holzschutzmittels.

## Beschreibung

Die Erfindung betrifft ein Holzschutzmittel, welches insbesondere zum dauerhaften Schutz von Holzerzeugnissen geeignet ist. Die Erfindung betrifft ferner ein Verfahren zur Herstellung des Holzschutzmittels sowie eine Verwendung des Holzschutzmittels.

Zum Schutz von Holz gibt es Produkte, die fast ausschließlich aus Polymerverbindungen hergestellt sind. Da Polymerverbindungen nur einen geringen Schutz gegen UV-Strahlen aufweisen, sind diese Produkte meist nur für Innenräume geeignet. Selbst für Außenbereiche geeignete Produkte zeigen keinen dauerhaften UV-Schutz, wenn es sich um transparente Produkte handelt.

Kesseldruckimprägnierte Hölzer enthalten schwermetallhaltige Salze und andere umweltgefährdende, giftige Stoffe. Diese schützt vor Pilzen, Fäulniserregern und Holzschädlingen. Kesseldruckimprägnierte Hölzer müssen im Sondermüll entsorgt werden, da beim Verbrennen giftige Rauchgase entstehen.

US 2019 / 0 002 731 A1 beschreibt ein wässriges Beschichtungszusammensetzungssystem zur Behandlung von Cellulosegegenständen, das eine erste wässrige Zusammensetzung mit einem pH-Wert von mindestens 10 umfasst und Kaliumsilikat und ein Penetrationshilfsmittel enthält, wobei das Kaliumsilikat in einem Bereich von 1,5 bis 32 Gew.-% vorhanden ist und das Molverhältnis von Silizium (Si) zu Kalium (K) des Kaliumsilikats 1,2-2,1 beträgt; und eine zweite wässrige Zusammensetzung, die eine Emulsion von mindestens einer Alkoxysilan- und/oder Siloxanverbindung enthält.

WO 2007 / 111 556 A2 beschreibt ein Kit mit Zusammensetzungen zur Behandlung von Zelluloseartikeln. Das Kit umfasst mindestens eine erste und eine zweite wässrige Zusammensetzung, wobei die erste wässrige Zusammensetzung einen basischen pH-Wert aufweist und eine Kaliumsilikatlösung umfasst und die zweite wässrige Zusammensetzung eine Emulsion von mindestens einer polymerisierbaren Alkoxysilanverbindung umfasst.

Der Erfindung liegt die Aufgabe zu Grunde, ein neuartiges, möglichst umweltschonendes Holzschutzmittel, welches möglichst auch eine Lebensmittelkontaktprüfung besteht, ein neuartiges Verfahren zur Herstellung des Holzschutzmittels sowie eine neuartige Verwendung des Holzschutzmittels anzugeben.

Die Aufgabe wird erfindungsgemäß gelöst durch ein Holzschutzmittel mit den Merkmalen des Anspruchs 1, durch ein Verfahren mit den Merkmalen des Anspruchs 6 und durch eine Verwendung mit den Merkmalen des Anspruchs 12.

Vorteilhafte Ausgestaltungen der Erfindung sind Gegenstand der Unteransprüche. In der vorliegenden Anmeldung sind Prozentangaben als Gewichtsprozent zu verstehen, sofern nicht ausdrücklich etwas anderes angegeben ist.

Zunächst wird ein Basisschutzmittel bereitgestellt, umfassend eine Mischung folgender Komponenten:
- mindestens ein Silikat,
- mindestens ein Alkylalkoxysilan mit maximal drei OH-Bindungen, -> z. B. eine Methylgruppe
- mindestens ein Alkylalkoxysilan mit vier bis acht OH-Bindungen, -> z. B. eine Propylgruppe und / oder eine Oktylgruppe
- Ethanol und/oder Butan-2-ol -> auch Isobutanol als Konservierungsstoff (oder Silanolgruppenstoff).

In einer Ausführungsform umfasst das Basisschutzmittel ferner bis zu 7,5% Gewichtsanteil oligomere Kieselsäure.

In einer Ausführungsform umfasst das Basisschutzmittel eine Mischung folgender Komponenten:
- 8 % bis 12 % Kieselsäureester,
- 15 % bis 25% Wasser,
- 18 % bis 43 %, beispielsweise 30 %, Alkohol Ethanol,
- 0,01 % bis 1,5% ungesättigte Fettsäure, beispielsweise Linolsäure, oder Phosphorsäure oder Tetramethylammoniumhydroxid
- 0,01 % bis 1,5% Kaliumsilikat als Silikat,
- 10 % bis 30% Alkylalkoxysilan mit maximal drei OH-Bindungen,
- 5 % bis 15% Alkylalkoxysilan mit vier bis acht OH-Bindungen,
- 0 bis 8% Alkohol Butan-2-ol und
- 0 bis 5% Kieselsäuredispersionskolloid.

In einer Ausführungsform ist als Kieselsäureester Tetraethylorthosilicat vorgesehen.

Ferner können Farbpigmente, insbesondere rein mineralische Farbpigmente, im Basisschutzmittel enthalten sein, beispielsweise 10% bis 20% Gewichtsanteile.

Gemäß einem Aspekt der vorliegenden Erfindung wird ein Schutzmittel vorgeschlagen, umfassend das oben beschriebene Basisschutzmittel, dem ein Bindemittel, insbesondere eine hydrophile pyrogene Kieselsäure oder eine kolloidale Kieselsäure beigemischt ist. Das Bindemittel kann beispielsweise als pulverförmiges und Nanopartikel enthaltendes Siliziumdioxid ausgebildet sein.

Erfindungsgemäß wird ein Holzschutzmittel vorgeschlagen, umfassend eine Mischung von 70 bis 94 Gewichtsprozent des Basisschutzmittels wie oben beschrieben mit folgenden weiteren Komponenten:
- 1 % bis 5 % Titan(IV)-oxid, beispielsweise flüssig oder in Pulverform, und
- mindestens eine Art des Lignins, beispielsweise Kraftlignin, insbesondere 5 % bis 25 % Lignin, beispielsweise in Pulverform, insbesondere nanoskalig.

Das Basisschutzmittel oder das Schutzmittel oder das Holzschutzmittel kann hergestellt werden, indem die Komponenten bei Umgebungstemperatur, insbesondere bei einer Temperatur von 15° C bis 30°C oder von 18 °C bis 35 °C miteinander vermischt werden.

Die Herstellung kann beispielsweise bei Umgebungsdruck, insbesondere bei einem Druck von 0,5 bar bis 2,5 bar, erfolgen.

Die Herstellungstemperatur kann so geregelt werden, dass die Materialmischung im Prozess mindestens 45 °C und maximal 59 °C erreicht.

In einer Ausführungsform kann die Herstellung dreistufig oder vierstufig erfolgen, insbesondere einschließlich Hydrolyse und/oder Polykondensation.

In einer Ausführungsform wird bei der Herstellung des Holzschutzmittels in einem ersten Schritt eine Hydrolyse mit Kieselsäure und Lignin durchgeführt. Im zweiten Schritt wird eine Hydrolyse von Oktylsilan mit Ti(IV)Ox durchgeführt, wobei den dabei entstandenen zwei Mischungen in einem dritten Schritt ein Gemisch aus Silanen (Methylgruppen, Propylgruppen und Oktylgruppen) zugeführt und damit bis zum Erhalt eines zumindest fast transparenten Produktes verrührt wird.

In einer Ausführungsform werden dabei 15 % bis 45% Kieselsäure, 5 bis 25 g/l Lignin und 1 bis 15 g Ti(IV)Ox verwendet, wobei die Rührzeit ein bis drei Stunden bei Umgebungstemperatur betragen kann, wobei eine Rührgeschwindigkeit 500/min bis 1.500 U/min betragen kann.

Nach der Herstellung des erfindungsgemäßen Basisschutzmittels kann dieses für farbige Anwendungen einer nochmaligen Behandlung unterzogen werden, um Farbpartikel einzubauen. Hierbei werden im letzten Schritt der Hydrolyse, im letzten Drittel des Herstellungsprozesses, mittels Einstreuen insbesondere rein mineralische Farbpigmente zugeführt. Die Dichte und Menge der Farbpigmente hängt von dem Einsatzbereich und Farbton ab. Eine Zuführung von Farbpigmenten mit einem Gewichtsanteil von 15 % bis 35 % ist besonders vorteilhaft. Chemisch beginnt dabei eine Reaktion um die Farbpigment-Partikel herum, diese werden sozusagen vom Basisschutzmittel eingekapselt.

Das oben beschriebene Holzschutzmittel kann zur Behandlung eines Bauteils aus Holz verwendet werden.

Dabei kann das Holzschutzmittel in einer Menge von 80 g/m² bis 120 g/m² auf das Bauteil aufgebracht werden, wobei bei älteren ausgetrockneten Hölzern auch ein doppelter Auftrag möglich ist.

Für die Behandlung von Holz wird das Basisschutzmittel insoweit abgewandelt, dass zur Versteinerung oder Kristallisation zur Erreichung der UV-Beständigkeit und Stabilität die Zusatzstoffe Titanoxid und Lignin etc. auf molekularer Ebene mit in das Basisschutzmittel eingebaut werden. Dies wird durch ein zusätzliches Herstellungsverfahren, insbesondere eine Hydrolyse, erreicht, in welchem ein spezielles Bindemittel, insbesondere eine pyrogene Kieselsäure, sowie ein oligomeres Kieselsäureester unter erhöhter Temperatur miteinander verbunden werden. Im zweiten Herstellungsschritt wird dieses Gemisch mit den Alkylalkoxysilanen mit maximal drei OH-Bindungen und Alkylalkoxysilanen mit vier bis acht OH-Bindungen verbunden.

Das Basisschutzmittel mit zusätzlichen Bestandteilen schützt Holz dadurch, dass die bei Wasserentzug entstehenden Fehlstellen mit dem Gemisch aufgefüllt werden und durch die reagierenden Mineralien eine Versteinerung und/oder Kristallbildung im Holz entsteht. Durch den Verschluss der Fehlstellen kann im ausgehärteten Zustand weder Wasser noch Öl eindringen.

Holzoberflächen werden durch die erfindungsgemäße Lösung vor UV-Strahlen geschützt, obwohl es sich dabei um einen transparenten Stoff handelt. Die enthaltenen Mineralien sorgen im Inneren des Holzes für die Versteinerung und besseren Brandschutz, ohne jedoch den Säuregehalt und dadurch die Flexibilität des Holzes zu sehr herabzusetzen. Die primäre Aufgabe des Schutzmittels besteht darin, dass eine unlösbare Verbindung von verschiedenen Holzarten mit Mineralien hergestellt wird und somit das Holz Eigenschaften von Kunststeinmischungen erhält.

Ferner können Holzbetonsteine hergestellt werden, indem Holzspäne mit dem Holzschutzmittel in Flüssigbeton eingesprüht werden.

Die Herausforderung im Kombinationsbereich Betonholz besteht darin, die komplett unterschiedlichen chemischen Strukturen und Festigkeiten auch über lange Zeiträume zu verbinden, ohne dass sich die beiden Komponenten entbinden. Durch das erfindungsgemäße Schutzmittel werden die vorteilhaften Holzeigenschaften bezüglich Brandschutzverhalten, Luftfeuchteregulation und leichterer Bauweise mit den Betonvorteilen, beispielsweise Festigkeit, verbunden. Dadurch kann sich beim Sägen des Holzes ein erhöhter Widerstand ergeben.

Das erfindungsgemäße Schutzmittel dringt tief in die durch Verdunstung/Trocknung des Wassers, entstehenden Holzfehlstellen ein. Vorteilhaft dabei ist, dass das Schutzmittel durch die Kapillarwirkung ohne Druck (kein Kesseldruckverfahren notwendig, daher umweltfreundlicher und weniger gesundheitsschädlich) und mit Umgebungstemperatur diese Hohlstellen erreichen kann. Sobald das Holz im Bereich seiner Oberfläche bis in eine Tiefe von wenigen Millimetern behandelt ist (beispielsweise durch Rollen, Sprühen oder Tränken), beginnt die Auskristallisierung. Diese wird durch die Restfeuchte und die Luftfeuchtigkeit angeregt. Man kann diesen Vorgang durch das Zuführen von Alkalität beschleunigen und verstärken. Verschiedene Holzarten haben grundsätzlich verschiedene Säuregehalte, welche normalerweise zu einem unterschiedlichen Ergebnis führen. Da das erfindungsgemäße Schutzmittel grundsätzlich sauer eingestellt ist, verlieren die Holzarten nicht alle positiven Eigenschaften, beispielsweise von Bauholz. Das entstehende Quarzmineral erhöht ab etwa drei bis acht Tagen die Bruchfestigkeit und vermindert die Wasseraufnahme um ca. 75% bis 95%. Nach weiteren vier bis acht Wochen Reaktionszeit entsteht eine fast geschlossene Oberfläche, welche weder Wasser noch Pflanzenöle aufnimmt. Ab diesem Zeitpunkt entstehen auch keine optisch zu erkennenden Flecken auf den Hölzern mehr, welche durch flüssige Verschmutzung entstehen können. Im Innenbereich sind diese Eigenschaften auch nach einem Klimatest (-18 Grad Celsius im mehrfachen Wechsel mit 200 Grad Celsius) zu beobachten.

Die Brennbarkeit des mit dem erfindungsgemäßen Schutzmittel behandelten Holzes ist deutlich herabgesetzt. Dies wurde in Feuertests bestätigt. Hierbei konnte beobachtet werden, dass das Schadensbild sich gegenüber einer unbehandelten Fläche kleiner darstellt, da Hitze und Feuerangriff an den Nanoglaskügelchen abgeleitet werden. Die Brennbarkeit selbst wird vermindert. Nachdem es zum Flammenschlag kommt, geht das Feuer dann wieder aus, sobald ein hierzu benutzter Bunsenbrenner vom Holz weggehalten wird.

Durch die Applikation des Schutzmittels auf Hölzer nimmt deren Anfälligkeit für Schimmel und Fräßlinge abhängig von der Auftragsschicht und Eindringtiefe ab. Die Applikation kann insbesondere bei sehr saugfähigem Holz statt durch Sprühen oder Rollen durch einen Tauchvorgang erfolgen, idealerweise über einen Zeitraum von 10 bis 60 Minuten.

Dem Holzschutzmittel können pulverförmige Farbpigmente zugemischt sein, beispielsweise in einer Konzentration von 5 Vol% bis 25 Vol%.

Im Folgenden werden Ausführungsbeispiele der Erfindung näher erläutert.

Zunächst wird ein Basisschutzmittel bereitgestellt.

Das Basisschutzmittel kann durch Mischung folgender Komponenten, insbesondere bei einer Misch-Temperatur von 18 °C bis 35 °C, erhalten werden:
8 % bis 12 % Kieselsäureester,
15 % bis 25% Wasser,
18 % bis 43 %, beispielsweise 30 %, Alkohol Ethanol,
0,01 % bis 1,5% ungesättigte Fettsäure, beispielsweise Linolsäure oder Phosphorsäure, Tetramethylammoniumhydroxid
0,01 % bis 1,5% Kaliumsilikat,
10 % bis 30% Alkylalkoxysilan mit maximal drei OH-Bindungen,
5 % bis 15% Alkylalkoxysilan mit vier bis acht OH-Bindungen,
0 bis 8% Alkohol Isobutanol (insbesondere bei Steinen, bei denen das Eindringen schwierig ist, wie z. B. hochkristalline Steine (Marmor usw.), oder bei denen eine längere Verarbeitungszeit nötig ist), und
0 bis 5% Kieselsäuredispersionskolloid.

Ein Kieselsäuredispersionskolloid ist eine flüssige Dispersion oder Suspension von Kieselsäurepartikeln in einem Medium wie Wasser oder einem Lösungsmittel. Kolloidale Systeme bestehen aus kleinen Partikeln, die in einer Flüssigkeit dispergiert sind und aufgrund ihrer Größe und Oberflächeneigenschaften stabil bleiben. Diese Kolloidpartikel sind in der Regel sehr fein verteilt und haben eine hohe spezifische Oberfläche, was zu einer stabilen Dispersion führt. Die Größe der Kieselsäurepartikel in einem Kolloid kann je nach Herstellungsverfahren und Anwendung variieren.

Als kurzkettig sollen Alkylalkoxysilane verstanden werden, die maximal drei OH-Bindungen aufweisen. Als langkettig sollen Alkylalkoxysilane verstanden werden, die vier bis acht OH-Bindungen aufweisen.

Die Herstellung des Basisschutzmittels kann dreistufig erfolgen, beispielsweise durch Hydrolyse und/oder durch Polykondensation. Beispielsweise können drei nacheinander erfolgende Hydrolysen erfolgen. In jedem Vorgang wird die zuvor hergestellte Mischung mit Zusatzstoffen versehen. Die Polykondensation erfolgt dabei automatisch. Die Silanolbildung wird durch die Temperatur und Mengenverhältnisse gesteuert, so dass die Vernetzung zu Molekülgerüsten und Gittern homogen abläuft, auch wenn es sich bei der Behandlung um unterschiedliche Holzarten handelt.

Durch Variation der Anteile der Alkylalkoxysilan mit vier bis acht OH-Bindungen, des Ethanols und des Butan-2-ols ist es möglich, auf die Restfeuchteanteile innerhalb einer werkseitigen Anwendung einzugehen.

Ein Holzschutzmittel zur "Kristallisation/Versteinerung" von Holz kann durch Mischung folgender Komponenten, insbesondere bei einer Temperatur von 18 °C bis 35 °C, erhalten werden:
2 % bis 5 % Titan(IV)-oxid,
5 % bis 15 % Lignin und
75 % bis 95 % des oben beschriebenen Basisschutzmittels.

Die Herstellung des Holzschutzmittels erfolgt beispielsweise in vier nacheinander ablaufenden Hydrolysestufen mit der einsetzenden Polykondensation, bei denen jeweils die beschriebenen extra Stoffe einzeln hinzugefügt werden.

Titanoxid und Lignin sind komplexe Moleküle. Aus diesem Grund wird im ersten Schritt ein Verfahren, insbesondere eine Hydrolyse, angewendet, in welchem diese Stoffe mit dem Kieselsäureester verbunden werden. Dieses Gemisch wird im weiteren Herstellungsverfahren mit den Silanen hydrolysiert. Abhängig von den Gewichtsanteilen der Ausgangstoffe können unterschiedliche Ergebnisse erzielt werden. Bei hohem Anteil von Titanoxid bekommt das behandelte Holz sehr schnell eine homogene Graufärbung. Bei geringerem Anteil Titanoxid und angepasstem Anteil Lignin entsteht ein UV-Schutz, da das Lignin dann nicht mehr ohne weiteres aus dem Holz flüchtig ist und somit die eigene Holzfarbe über einen erheblich längeren Zeitraum erhalten bleibt.

Durch die Auskristallisierung in Hohlstellen des Holzes wird eine statische Stabilisierung erreicht, die im Bauholzbereich relevant ist. Da der Grundstoff (das zuerst beschriebene Basisschutzmittel) bis etwa 300 °C stabil bleibt, sollte auch das behandelte Holz eine höhere Feuerfestigkeit erreichen und somit für Brandschutzauflagen bessere Werte erzielen.

Die Wasseraufnahme des behandelten Holzes ist stark vermindert. Fräßlinge (Borkenkäfer, Holzwurm) mögen dieses behandelte Holz aufgrund der eingelagerten Mineralien nicht. Auch Pilze, welche sich von Zellulose ernähren, wachsen wesentlich langsamer, da das Herauslösen der Zellulose aus dem Holz durch den Mineralienverschluss nicht mehr in vollem Umfang gegeben ist.

Bei der Trocknung von Holz wird der Wasseranteil im Holz stark verringert. Hierdurch entstehen Hohlräume im Gefüge. Diese werden durch die Tränkung mit dem oben beschriebenen Basisschutzmittel oder dem oben beschriebenen Holzschutzmittel aufgefüllt. Dadurch kristallisiert das Holz von innen heraus aus, analog wie beim Naturstein, so dass es eine Art der Versteinerung bildet. Um die chemische Reaktion im Holz zu starten, kann nach dem Behandeln mit dem Basisschutzmittel eine alkalische Chemikalie, z. B. Kieselsäure, insbesondere ein angepasstes Kieselsäureester, aufgebracht werden.

Im Holzschutzmittel ist durch chemische Vorgänge, insbesondere Hydrolyse, das Basisschutzmittel mit Lignin und Titandioxid gekoppelt. Lignin ist der Holzbestandteil, welcher für die Festigkeit und den Farbton zuständig ist. Titandioxid ist hier ein weißes Pulver, welches für eine UV-Beständigkeit sorgt. Lignin hat die Grundfarbe braun, Titandioxid ist als wichtigstes Weißpigment bekannt. Erstaunlicherweise ist das Holzschutzmittel trotzdem fast transparent, das heißt auf Holz gibt es keine Farbtonveränderung durch das aufgebrachte Holzschutzmittel. Es kann farblich nur ein leichter Nasseffekt entstehen.

Das Holzschutzmittel kann beispielsweise auf neues oder gereinigtes Holz aufgesprüht werden, beispielsweise in einer Menge von etwa 80 g/m² bis 120 g/m². Nach einer kurzen Trocknungszeit von beispielsweise zwei bis drei Stunden kann eine zweite Schicht aufgetragen werden, wenn das Holz bereits sehr alt und sehr trocken und mit vielen Fehlstellen versehen, ist. Mit der Luftfeuchtigkeit und Holzrestfeuchte beginnt die chemische Reaktion, insbesondere eine Kristallisation, welche nach 24 bis 48 Stunden bereits einen Basisschutz aufweist, so dass das Holzbauteil normal genutzt werden kann.

Es wurde festgestellt, dass das Holz keine nennenswerte Gewichtszunahme nach der Behandlung aufweist. Die Wasseraufnahme ist bei vollflächiger Behandlung sehr stark herabgesetzt. Die Härte des Holzes wurde signifikant erhöht.

Für die Herstellung des Holzschutzmittels kann im ersten Schritt eine Hydrolyse mit Kieselsäure und Lignin (¹³C₉H₁₀O₂, ¹³C₁₀H₁₂O₃, ¹³C₁₁H₁₄O₄) und dem Ti(IV)Ox durchgeführt werden. Ideal ist hierbei der Bereich von 15 Gew.-% bis Gew.-45% der ersten Hydrolyse, also 20 Gew.-% bis 25 Gew.-% der finalen Gesamtmischung für TEOS, 5 bis 10 g/l Lignin und 7 bis 15 g/l Ti(IV)Ox bezogen auf die erste Hydrolyse. Im zweiten Schritt wird diesem Gemisch ein Gemisch aus Alkylalkoxysilan mit maximal drei OH-Bindungen (ideal 20 % bis 30 Gewichts-%) und Alkylalkoxysilan mit vier bis acht OH-Bindungen (5 % bis 15 Gewichts-%) zugeführt. Dieses ist so lange zu rühren bis ein transparenter Stoff entsteht. Idealerweise liegt die Rührzeit bei ein bis drei Stunden bei Umgebungstemperatur und Luftfeuchtigkeit bei 50 % bis 75 %. Die Rührgeschwindigkeit sollte 500 U/min nicht unterschreiten.

Als Reaktionsmedium und/oder Kondensationsbeschleuniger kann statt Linolsäure oder Phosphorsäure auch Tetramethylammoniumhydroxid (gehört zur organischen Amingruppe) zur Anwendung kommen. Grund hierfür ist die Hilfe des Stoffes bei der Erhöhung der Reaktionsgeschwindigkeit der Kondensation, um die Vernetzung der Silanolgruppen zu beschleunigen und somit das Zeitfenster der hydrophilen Anfälligkeit nach der Verdunstung des Alkohols zu verringern.

Lignin kann in die Reaktionsgleichung eingebaut werden, wenn es an der Hydrolyse teilnimmt. Lignin kann in Hydrolysereaktionen mit Silanen wie TEOS oder anderen Silanen reagieren und Silanolgruppen bereitstellen, die dann an der Kondensation zu Siloxanbindungen beteiligt sind. Die Reaktionsgleichung könnte dann wie folgt aussehen:

n R-Si(OH)₃ + Lignin → [-Si-O-Si-]n + n H₂O + Lignin-Reaktionsprodukte

Dabei wird das Lignin in die Siloxanstruktur integriert, und die entstehenden Siloxanbindungen können zur Vernetzung und Stabilisierung der Oberfläche beitragen. Die genaue Reaktion hängt von den spezifischen Reaktionsbedingungen, der Menge und Art des verwendeten Lignins sowie der Art des Silans ab. Die tatsächlichen Reaktionen können komplexer sein, da in der Praxis verschiedene Faktoren eine Rolle spielen können.

Wenn Titandioxid als Teil der Hydrolysereaktion mit Silanen wie TEOS verwendet wird und Lignin ebenfalls an der Reaktion beteiligt ist, könnte die Reaktionsgleichung wie folgt aussehen:

n R-Si(OH)₃ + Lignin + m TiO₂ → [-Si-O-Si-]n + n H2O + Lignin- Reaktionsprodukte + m TiO₂-Reaktionsprodukte

In dieser Reaktionsgleichung reagieren die Silanolgruppen der Silane mit Lignin und Titandioxid, um Siloxanbindungen zu bilden. Das entstehende Material kann dann eine Mischung aus Siloxanen, Lignin und Titandioxid enthalten, wodurch eine Schutzschicht mit spezifischen Eigenschaften entsteht. Wie bereits erwähnt, können die tatsächlichen Reaktionen komplexer sein und von den spezifischen Bedingungen und Komponenten abhängen, die in der Hydrolyse verwendet werden.

Während der Hydrolyse werden die Silane (Alkylalkoxysilane) unter Zugabe von Wasser in mindestens ein Silanol umgewandelt.

In dieser Reaktion ersetzt Wasser die Alkoxy-Gruppe am Silanmolekül durch Hydroxygruppen (OH), wodurch Silanolgruppen entstehen.

In den entstandenen Silanolen sind die organischen R-Gruppen (Reste) ebenfalls als kurze oder lange Ketten vorhanden.

Beispiel für ein kurzkettiges Silan: Methyltriethoxysilan; dabei ist Reine Methylgruppe, die zu Methylsilanol (CH₃-Si(OH)₃) wird.

Beispiel für ein langkettiges Silan: Oktylsilan; dabei ist Reine Oktylgruppe, welche zu Oktylsilanol wird (C₈H₁₇-Si(OH)₃).

Abhängig von der R-Gruppe der Silane entstehen also lange oder kurze Silanole.

Kurzkettige Silane (z. B. Methyltrieethoxysilan) haben kleine organische Methylgruppen, wodurch die Reaktionsgeschwindigkeit erhöht und im Anschluss die Kondensation zu Siloxanen erleichtert wird. Diese benötigen weniger Platz und können das Gitter dichter bilden (kompaktes stabiles Siloxannetzwerk) und haften besser an den Oberflächen.

Langkettige Silane (z. B. Oktyltriethoxysilan) bieten deutlich erhöhte wasserabweisende Eigenschaften an der Oberfläche (Oleophobie), haben durch ihre Länge eine höhere Flexibilität und verringern dadurch Spannungen und Risse.

Durch die Kombination von kurzen und langen Silanen können dickere und robustere Schutzschichten ohne Verlust der Flexibilität erreicht werden.

TEOS (Tetraethylorthosilikat) kann als Hauptlieferant für das Siliziumatom (Si) eingesetzt werden.

Wenn die Silanole auf die zu behandelnde Oberfläche aufgebracht werden und das Ethanol verdunstet, beginnt die Kondensation, wobei zwei Silanolgruppen miteinander unter Abspaltung von Wasser zu einer Siloxanbindung reagieren.

Diese Reaktion führt zum sogenannten Siloxangitter oder Siloxannetzwerk. Dabei kommt es zu regelmäßiger oder amorpher Gitterbildung.

Bei der vorliegend beschriebenen Silanolkombination ist es möglich, dass auch bei höheren Restfeuchten im zu behandelnden Bauteil die Siloxanreaktion zum gewünschten Ergebnis, das heißt zur regelmäßigen Gitterbildung, führt.

Wenn Silane zunächst hydrolysiert werden, entstehen Silanole (R-Si(OH)₃), die reaktiver sind und schneller mit Oberflächen reagieren. Diese Methode führt zu einer schnelleren und oft vollständigeren Oberflächenbehandlung, da die Silanole in der Lage sind, unmittelbar nach dem Auftragen Siloxanbindungen zu bilden.

## Patentansprüche

1. Holzschutzmittel, umfassend:
- eine Mischung von 65 Gew.-% bis 90 Gew.-% eines Basisschutzmittels, umfassend mindestens ein Silikat, mindestens ein Alkylalkoxysilan mit maximal drei OH-Bindungen, mindestens ein Alkylalkoxysilan mit vier bis acht OH-Bindungen, Ethanol und/oder Butan-2-ol als Konservierungsstoff,
- 2 % bis 5 % Titan(IV)-oxid, und
- 5 % bis 15 % Lignin.

2. Holzschutzmittel nach Anspruch 1, ferner umfassend bis zu 7,5% oligomere Kieselsäure.

3. Holzschutzmittel nach Anspruch 1 oder 2,
wobei das Basisschutzmittel eine Mischung folgender Komponenten umfasst:
- 8 % bis 12 % Kieselsäureester,
- 15 % bis 25% Wasser,
- 20%-35 % Alkohol Ethanol,
- 0,01 % bis 1,5% ungesättigte Fettsäure oder Phosphorsäure oder Tetramethylammoniumhydroxid
- 0,01 % bis 1,5% Kaliumsilikat als Silikat,
- 10 % bis 30% Alkylalkoxysilan mit maximal drei OH-Bindungen,
- 5 % bis 15% Alkylalkoxysilan mit vier bis acht OH-Bindungen,
- 0 bis 8% Alkohol Butan-2-ol, und
- 0 bis 5% Kieselsäuredispersionskolloid.

4. Holzschutzmittel nach Anspruch 3, wobei als Kieselsäureester Tetraethylorthosilicat vorgesehen ist.

5. Holzschutzmittel nach einem der vorhergehenden Ansprüche, wobei dem Basisschutzmittel ein Bindemittel, insbesondere eine hydrophile pyrogene Kieselsäure oder eine kolloidale Kieselsäure, beigemischt ist.

6. Verfahren zur Herstellung des Holzschutzmittels nach einem der vorhergehenden Ansprüche, wobei die Komponenten bei einer Umgebungstemperatur von 15° C bis 30°C oder von 18 °C bis 35 °C miteinander vermischt werden.

7. Verfahren nach Anspruch 6, wobei die Herstellung dreistufig oder vierstufig erfolgt, insbesondere einschließlich Hydrolyse und/oder Polykondensation.

8. Verfahren nach Anspruch 6 oder 7, wobei in einem ersten Schritt eine Hydrolyse mit Kieselsäure, Lignin und Ti(IV)Ox durchgeführt wird, wobei der dabei entstandenen Mischung in einem zweiten Schritt ein Gemisch aus Alkylalkoxysilan mit maximal drei OH-Bindungenund Alkylalkoxysilan mit vier bis acht OH-Bindungen zugeführt und damit bis zum Erhalt eines transparenten Produktes verrührt wird.

9. Verfahren nach Anspruch 8, wobei 15 % bis 45% Kieselsäure, 5 bis 10 g/l Lignin und 7 bis 15 g/l Ti(IV)Ox verwendet werden.

10. Verfahren nach Anspruch 9, wobei die Rührzeit ein bis drei Stunden bei Umgebungstemperatur beträgt.

11. Verfahren nach Anspruch 9 oder 10, wobei eine Rührgeschwindigkeit mindestens 500/min beträgt.

12. Verwendung des Holzschutzmittels nach einem der Ansprüche 1 bis 5 zur Behandlung eines Bauteils aus Holz, insbesondere Bauholz.

13. Verwendung nach Anspruch 12; wobei das Holzschutzmittel in einer Menge von 80 g/m² bis 120 g/m² auf das Bauteil aufgebracht wird, wobei anschließend Kieselsäureester in einer Menge von 25 g/m² bis 35 g/m² aufgebracht wird.
